# EUROPEAN PATENT APPLICATION

(11) **EP 4 667 338 A1**
(43) Date of publication of application: **24.12.2025**
(21) Application number: 25183040.2
(22) Date of filing: 16.06.2025
(51) Int. Cl.: B62K 5/08, B62K 5/10, B62K 5/06, B62K 3/02, B62K 7/04, B62M 6/55, B62K 5/05

(54) **LEAN VEHICLE**

(30) Priority: 17.06.2024 JP 2024097152
(71) Applicant: Kawasaki Motors, Ltd., Akashi, Hyogo 673-8666 (JP)
(72) Inventor: UEDA, Kazuki, Akashi-shi, 6738666 (JP)
(74) Representative: Wenzel Nemetzade Warthmüller Patentanwälte Part mbB

(57) **Abstract**

The lean vehicle 1 includes a left wheel 3a, a right wheel 3b, a parallel link mechanism 20, a mounting member 70, and a vehicle body frame 2. The parallel link mechanism 20 includes upper and lower arms 21, 22 arranged along the vehicle width direction between the left and right wheels 3a, 3b, and left and right arms 23, 24, arranged along the up-down direction, and operates in response to the lean of the vehicle. The mounting member 70 includes the plurality of support parts 72a, 72c and the connecting part 73. The multiple support parts 72a, 72c rotatably support fulcrums provided on the upper arm and the lower arm 21, 22, respectively. The connecting part 73 connects the multiple support parts in the up-down direction. The base 60 is formed on the vehicle body frame 2 to which a mounting member 70 is attached.

## Description

### [Technical field]

The present application relates to a lean vehicle including a parallel link mechanism.

### [Background art]

Patent Document 1 is Japanese Patent Application Laid-Open No. 2022-026352.

Patent Document 1 discloses a two-front wheel type vehicle. The two-front wheel type vehicle includes a frame and a lean mechanism. In detail, the frame is formed with an upper support shaft and a lower support shaft. The upper support shaft and the lower support shaft are disposed side by side in the up-down direction. The upper link of the lean mechanism is rotatably supported on the upper support shaft of the frame. The lower link of the lean mechanism is rotatably supported on the lower support shaft of the frame.

### [Summary of the Invention]

In order for the parallel link mechanism to operate properly during leaning, high precision is required for the positional relationship of each arm of the parallel link mechanism. Therefore, in the mounting configuration of Patent Document 1, high precision is required in the positions at which the upper support shaft and the lower support shaft are formed. As a result, the degree of difficulty in assembling the portion of the frame that supports the parallel link mechanism increases.

The present application has been made in consideration of the above circumstances, and its main object is to provide a configuration that enables easy assembly of the portion of a vehicle body frame that supports a parallel link mechanism in a lean vehicle equipped with a parallel link mechanism for leaning.

### [Means for solving the problem]

The problem to be solved by the present application is as described above. Next, the means for solving this problem and the effects thereof will be described.

According to an aspect of the present application, there is provided a lean vehicle having the following configuration. That is, the lean vehicle includes a left wheel, a right wheel, a parallel link mechanism, a mounting member, and a vehicle body frame. The parallel link mechanism includes a horizontal arm arranged along a vehicle width direction between the left wheel and the right wheel and a vertical arm arranged along the up-down direction, and operates in response to the lean of the vehicle. The mounting member includes a plurality of support parts and connecting part. The plurality of support parts rotatably support fulcrums provided on the respective horizontal arms, and connecting part connects the plurality of support parts in the up-down direction. The vehicle body frame is formed with a base to which the mounting member is attached.

### [Effect of the Invention]

According to the present application, the portion of the vehicle body frame that is involved in supporting the parallel link mechanism can be easily assembled.

### [Brief description of the drawings]

FIG. 1 is a side view of a lean vehicle according to an embodiment of the present application.
FIG. 2 is a front view of a lean vehicle in an upright position.
FIG. 3 is a front view of a lean vehicle during leaning.
FIG. 4 is a perspective view of an upper arm, a lower arm, and a central arm of a lean mechanism.
FIG. 5 is a side view of a mounting member and a vehicle body frame.
FIG. 6 is a perspective view of a mounting member and a vehicle body frame.
FIG. 7 is a perspective view showing a shape of a base of a vehicle body frame.

### [Embodiment of invention]

Next, an embodiment of the present application will be described with reference to the drawings. In the following description, each direction of the lean vehicle 1 is defined as a direction seen by a driver riding in the lean vehicle 1 standing upright on a horizontal surface. Therefore, a front-rear direction corresponds to a vehicle length direction, and a left-right direction corresponds to a vehicle width direction. A vertical direction and an up-down direction corresponds to a height direction. In this description, terms such as parallel, perpendicular, and coincident include not only a state in which the meanings of these terms strictly hold, but also a state in which the meanings of these terms substantially hold (in other words, a state in which there is a slight difference).

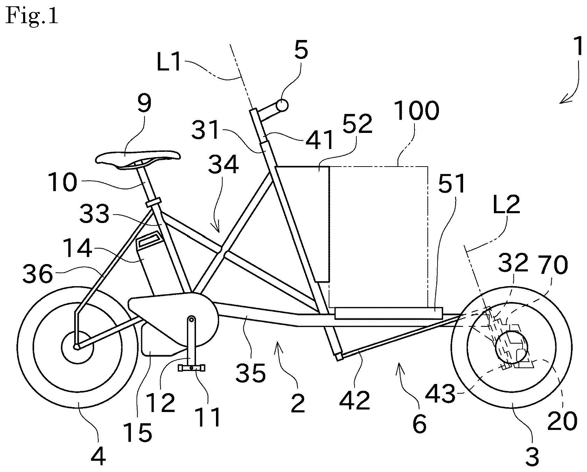

The lean vehicle 1 shown in FIG. 1 is a lean vehicle that inclines with respect to a road surface when turning or the like. The lean vehicle 1 is a vehicle on which a driver straddles, and the lean vehicle 1 corresponds to a straddle vehicle. The lean vehicle 1 runs using a force applied by the driver to pedals and a force generated by a motor. In particular, since the lean vehicle 1 of this embodiment is an electrically assisted bicycle, the motor generates power on the condition that the driver applies a force to the pedals.

The lean vehicle 1 is not limited to an electrically assisted bicycle. For example, the lean vehicle 1 may be a non-assisted electric bicycle. In this case, the motor of the lean vehicle 1 can generate power to run the lean vehicle 1 even when the driver is not applying force to the pedal. The lean vehicle 1 may be an electric vehicle. In this case, the pedals can be omitted from the lean vehicle 1, and a footrest or the like is provided instead of the pedals. The lean vehicle 1 may be a bicycle that is not of the electric type. In this case, the motor and the battery are omitted from the lean vehicle 1.

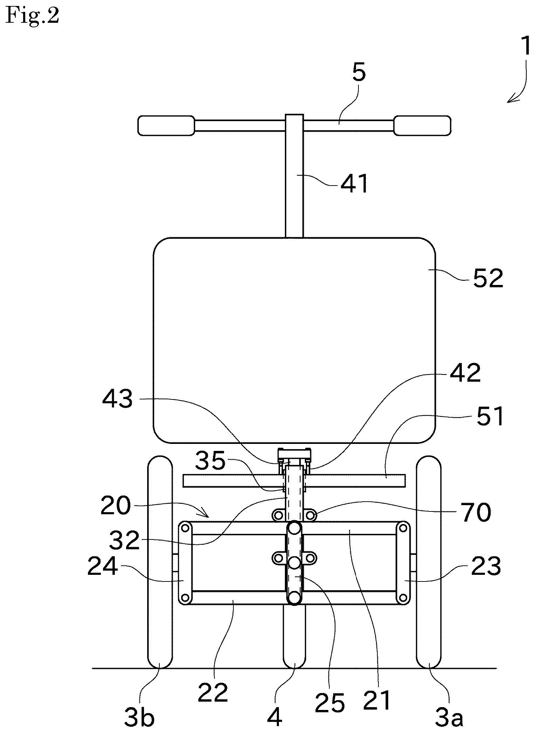

As shown in FIGS. 1 and 2, the lean vehicle 1 includes a vehicle body frame 2, a left front wheel 3a, a right front wheel 3b, and a rear wheel 4.

The vehicle body frame 2 is a structural member that forms the framework of the lean vehicle 1. Various components of the lean vehicle 1 are attached to the vehicle body frame 2. The vehicle body frame 2 is constructed by combining a plurality of frames in order to ensure the necessary rigidity. The vehicle body frame 2 will be described in detail later.

The left front wheel 3a, the right front wheel 3b, and the rear wheel 4 each include a wheel body and a tire attached to the wheel body. The left front wheel 3a corresponds to a "left wheel", and the right front wheel 3b corresponds to a "right wheel". Hereinafter, the left front wheel 3a and the right front wheel 3b may be collectively referred to as the front wheels 3. The lean vehicle 1 of this embodiment is a three-wheeled bicycle having two front wheels and one rear wheel. Alternatively, the lean vehicle 1 may be a three-wheeled bicycle with one front wheel and two rear wheels. In this case, the rear wheel on the left side corresponds to the "left wheel" and the rear wheel on the right side corresponds to the "right wheel". A parallel link mechanism and mounting member and the like, which will be described later, are disposed between the left rear wheel and the right rear wheel. The total number of front and rear wheels provided on the lean vehicle 1 is not limited to three, but may be two or four or more.

The left front wheel 3a is disposed on the left side of the center position of the vehicle width. The right front wheel 3b is disposed on the right side of the center position of the vehicle width. The left front wheel 3a and the right front wheel 3b are supported by the vehicle body frame 2 via a parallel link mechanism 20.

As shown in FIG. 2, the parallel link mechanism 20 includes an upper arm 21, a lower arm 22, a left arm 23, a right arm 24, and a central arm 25. The arms constituting the parallel link mechanism 20 are connected to form a square. The connected arms are capable of relative rotation at their respective connection positions. The upper arm 21 and the lower arm 22 are disposed vertically side by side. The upper arm 21 and the lower arm 22 each correspond to a "horizontal arm". The left arm 23, the right arm 24 and the central arm 25 each correspond to a "vertical arm". The left arm 23 and the right arm 24 are disposed side by side. The central arm 25 connects the central portion of the upper arm 21 and the central portion of the lower arm 22. The support structure of the parallel link mechanism 20 on the vehicle body frame 2 will be described later.

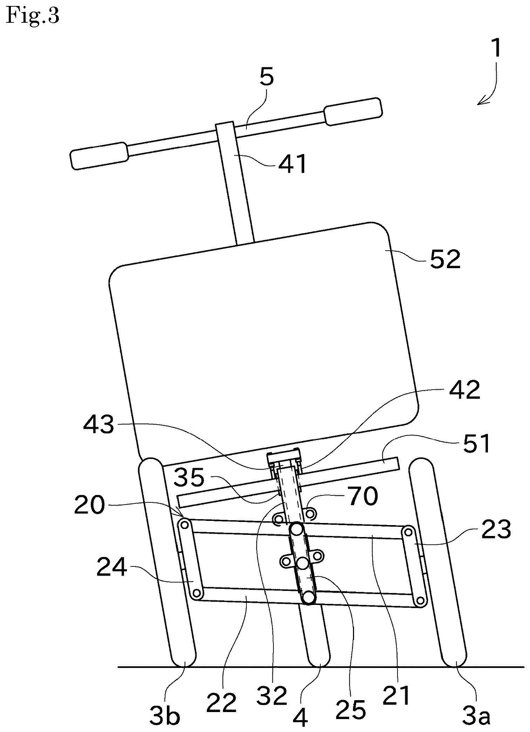

As shown in FIG. 2, when the lean vehicle 1 is upright on a horizontal plane, the longitudinal directions of the upper arm 21 and the lower arm 22 are parallel to the horizontal plane. When the lean vehicle 1 is upright on a horizontal surface, the longitudinal directions of the left arm 23 and the right arm 24 are parallel to the up-down direction. Therefore, the parallel link mechanism 20 has a rectangular shape. On the other hand, as shown in FIG. 3, when the lean vehicle 1 is leaned on the horizontal plane, the longitudinal directions of the upper arm 21 and the lower arm 22 are substantially parallel to the horizontal plane. If the height of the connection position between the left front wheel 3a and the left arm 23 is different from the height of the connection position between the right front wheel 3b and the right arm 24, the longitudinal directions of the upper arm 21 and the lower arm 22 may be inclined from the horizontal plane accordingly. When the lean vehicle 1 is leaned on the horizontal plane, the longitudinal directions of the left arm 23 and the right arm 24 are inclined with respect to the up-down direction. In other words, the longitudinal direction of the left arm 23 and the right arm 24 is parallel to the longitudinal direction of the left front wheel 3a and the right front wheel 3b when viewed from the front. The longitudinal direction of the left arm 23 and the right arm 24 is parallel to the longitudinal direction of the central arm 25. By using the parallel link mechanism 20, the left front wheel 3a and the right front wheel 3b can each be inclined relative to the road surface, while the vehicle body frame 2 can be tilted relative to the road surface.

The front wheels 3 are steerable wheels, and the steering angle of the front wheels 3 changes in response to the driver's steering operation. The lean vehicle 1 is equipped with a steering wheel 5 for steering. When the driver rotates the steering handle 5 about the rotation axis L1, the rotational force is transmitted to the front wheels 3 via the steering mechanism 6, which will be described later. As a result, the steering angle of the front wheels 3 changes.

A seat 9 for a driver to sit on is provided behind the steering handle 5. The seat 9 is connected to a seat post 10. The seat post 10 is attached to the vehicle body frame 2. The seat post 10 is disposed at an angle such that the upper end is located rearward of the lower end.

Pedals 11 are provided below the seat 9. The pedals 11 are disposed in a pair on the left and right. The driver sits in the seat 9, grips the steering handle 5 with his/her hands to steer, and drives the lean vehicle 1 by pedaling the pedals 11 with his/her feet.

A crank 12 is connected to the pedal 11. The crank 12 is rotatable about a crankshaft. The torque generated by pedaling the pedals 11 to rotate the crank 12 is transmitted to the rear wheel 4, which is the driving wheel, via the drive chain.

A battery 14 and a motor 15 are provided in the area between the front wheels 3 and the rear wheel 4 in the front-rear direction, more specifically, in the area rearward of the axle position of the front wheels 3 and forward of the axle position of the rear wheel 4.

The battery 14 stores power. The battery 14 is, for example, a combination of small cylindrical lithium ion rechargeable batteries. The battery 14 is not limited to a lithium-ion rechargeable battery, and other types of rechargeable batteries such as a nickel-metal hydride battery may be used. The battery 14 is not limited to a configuration in which a plurality of rechargeable batteries are combined. For example, a single rechargeable cell having a desired shape may be manufactured and used as the battery 14.

The battery 14 is fixed to the vehicle body frame 2 via a battery holder. By mounting the battery 14 on the battery holder, a terminal of the battery 14 is electrically connected to a conductor of the battery holder. The conductors of the battery holder are connected to the motor 15 via electric wires or the like that pass inside or outside the vehicle body frame 2. This allows power to be supplied from the battery 14 to the motor 15.

The motor 15 is fixed to the vehicle body frame 2 using fasteners such as bolts. The motor 15 has a motor body and a motor driver. A driving current is supplied from the motor driver to the motor body, causing the motor body to generate power. There are various types of motor 15, and for example, a brushed DC motor, a brushless DC motor, an AC servo motor, etc. can be used.

The force generated by the motor 15 is transmitted to the motor sprocket via a reduction gear. The chain meshes with a sprocket for the motor. This allows the rear wheel 4 to be driven using the power generated by the motor 15.

Next, the steering mechanism 6 will be described. In the following description, terms such as connecting, coupling, and attachment include not only a state in which two members are directly connected, but also a state in which two members are indirectly connected via another member.

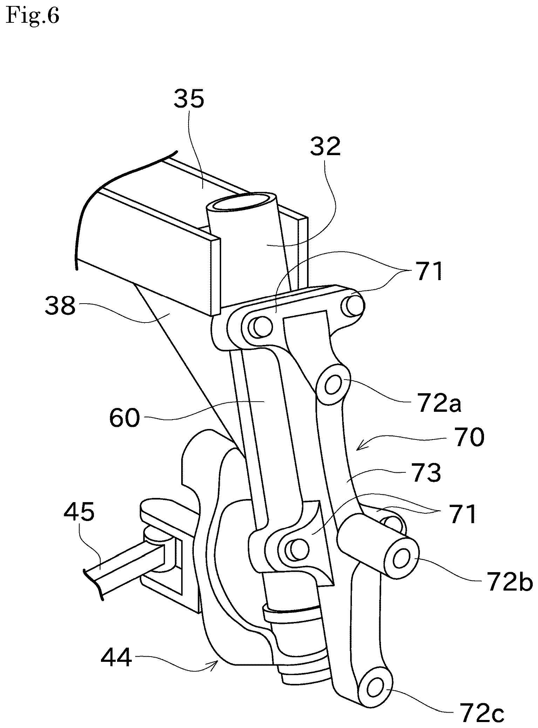

As shown in FIG. 1, the steering mechanism 6 includes a first steering shaft 41, a first steering arm 42, and a second steering shaft 43. As shown in FIG. 6, the steering mechanism 6 includes a connecting member 44 and a second steering arm 45.

The first steering shaft 41 is connected to the steering handle 5. The first steering shaft is rotatable relative to a first head pipe 31 which will be described later. The first steering shaft 41 is located rearward of the front wheel 3 in the front-rear direction. When the driver rotates the steering handle 5, the first steering shaft 41 rotates about its axial direction. Hereinafter, the force applied by the driver to the steering handle 5 will be referred to as the steering force. The rear end of the first steering arm 42 is rotatably linked to the lower end of the first steering shaft 41.

The first steering arm 42 transmits the steering force received from the first steering shaft 41. Specifically, the pair of first steering arms 42 are provided on the left and right sides, and in response to the rotation of the first steering shaft 41, one of the first steering arms 42 moves forward and the other first steering arm 42 moves rearward. The second steering shaft 43 is rotatably linked to the front end of the first steering arm 42. In other words, the rear end of the first steering arm 42 is connected to the first steering shaft 41 at a position spaced apart in the left-right direction from the rotation axis of the first steering shaft 41. The front end of the first steering arm 42 is connected to the second steering shaft 43 at a position spaced apart in the left-right direction from the rotation axis of the second steering shaft 43. The front and rear ends of the first steering arm 42 are linked and connected to an extension portion extending in the left-right direction from the first steering shaft 41 so as to be able to move relatively.

The second steering shaft 43 transmits the steering force received from the first steering arm 42. In detail, the steering force of the two first steering arms 42 is transmitted to, for example, a rotating plate, and the steering force is transmitted to a second steering shaft 43 fixed to the rotating plate. The second steering shaft 43 is disposed in a position overlapping with the front wheels 3 in the front-rear direction. The second steering shaft 43 is rotatable relative to a second head pipe 32 which will be described later. When the steering force is transmitted to the second steering shaft 43, the second steering shaft 43 rotates about its axial direction. The second steering arm 45 is connected to the lower end of the second steering shaft 43 via a connecting member 44.

The second steering arm 45 uses the steering force received from the second steering shaft 43 to push or pull the front wheels 3 to change the steering angle of the front wheels 3. Specifically, the second steering arms 45 are provided in a pair on the left and right, with the left second steering arm 45 connected to the left front wheel 3a and the right second steering arm 45 connected to the right front wheel 3b. As described above, the front wheels 3 are steered using the steering force applied by the driver to the steering handle 5.

The lean vehicle 1 of this embodiment has two steering shafts. Alternatively, the lean vehicle 1 may include only one steering shaft. For example, in a vehicle in which the steering handle 5 and the front wheels 3 overlap in the front-rear direction, the steering force can be transmitted from the steering handle 5 to the front wheels 3 even with one steering shaft.

Next, the vehicle body frame 2 will be described.

As shown in FIG. 1, the vehicle body frame 2 includes a first head pipe 31, a second head pipe 32, a seat tube 33, a reinforcing frame 34, a lower frame 35, and a rear frame 36.

The first head pipe 31 and the second head pipe 32 are members related to the steering mechanism 6. The first head pipe 31 and the second head pipe 32 are straight, cylindrical members. The first head pipe 31 is located rearward of the front wheel 3 in the front-rear direction. The first steering shaft 41 is inserted into the first head pipe 31. The second head pipe 32 is positioned so as to overlap the front wheel 3 in the front-rear direction. The second steering shaft 43 is inserted into the second head pipe 32. The upper ends of the steering shafts 41, 43 are exposed upward from the corresponding head pipes 31, 32. The lower ends of the steering shafts 41, 43 are exposed downward from the corresponding head pipes 31, 32. The head pipes 31, 32 are fixed to the vehicle body frame 2 that constitutes a part of the vehicle. Specifically, the first head pipe 31 is fixed to the reinforcing frame 34 and the lower frame 35.

In this embodiment, each head pipe is disposed at an incline such that its upper end is positioned rearward of its lower end. In other words, as shown in FIG. 1, the rotation axis L1 of the first steering shaft 41 and the rotation axis L2 of the second steering shaft 43 are inclined such that their upper ends are positioned rearward relative to their lower ends.

When the lean vehicle 1 has only one steering shaft, the vehicle body frame 2 also has only one head pipe. In other words, the number of head pipes provided on the vehicle body frame 2 is not limited to two. When the vehicle body frame 2 is equipped only with the first head pipe 31, the first steering arm 42 and the second head pipe 32 are omitted, and a position in the front-rear direction of the first head pipe 31 overlaps with a position in the front-rear direction of the front wheel 3. In this case, the connecting member 44 is connected to the lower end of the first steering shaft 41.

The seat tube 33 is located in an area between the front wheel 3 and the rear wheel 4 in the front-rear direction, and in an area between the left front wheel 3a and the right front wheel 3b in the left-right direction. The seat post 10 is inserted into the seat tube 33. The seat tube 33 is a straight, cylindrical member.

The reinforcing frame 34 is a frame that is located in a range that includes the area between the first head pipe 31 and the seat tube 33 in the front-rear direction. The lean vehicle 1 of this embodiment includes a plurality of reinforcing frames 34. However, the lean vehicle 1 may be provided with one reinforcing frame 34, or the reinforcing frame 34 may be omitted if sufficient rigidity is ensured. The reinforcing frame 34 may be connected to the first head pipe 31 and the seat tube 33, or may be connected to a separate member.

The lower frame 35 is a frame that serves as the foundation of the lean vehicle 1. The lower frame 35 is a linear member having a rectangular cross section. The lower frame 35 is disposed below the center of the lean vehicle 1 in the up-down direction. More specifically, the lower frame 35 is disposed in a range including a position lower than the upper ends of the front wheels 3. The lower frame 35 extends in the front-rear direction. The front end of the lower frame 35 is positioned so as to overlap the front wheel 3 in the front-rear direction. The second head pipe 32 described above is connected to the front end of the lower frame 35. The front end of the lower frame 35 supports the front wheel 3 via the second head pipe 32 and the parallel link mechanism 20. The rear end of the lower frame 35 is connected to the lower end of the seat tube 33, a member supporting the crankshaft, or a member supporting the motor 15.

The lower frame 35 in this embodiment corresponds to a luggage supporting frame. In particular, the portion of the lower frame 35 that is located forward of the first head pipe 31 corresponds to the luggage support frame. The luggage support frame is a frame that supports luggage 100 as shown in FIG. 1. A placement member 51 for placing the luggage 100 is attached to the luggage support frame. A restraining member 52 for stabilizing the position of the luggage 100 is attached to the seat tube 33. The lower frame 35 may be provided with a fall prevention frame that prevents the luggage 100 from falling sideways and forwards.

The lower frame 35 is just one example of a luggage support frame. A frame provided at a position higher than the upper end of the front wheels may be the luggage support frame. **In** other words, the placing surface of the placement member 51 may be lower than the upper end of the front wheel 3 in the up-down direction, or may be higher than the upper end of the front wheel 3. The front end of the luggage support frame may be located forward of the front wheel 3, overlapping with the front wheel 3, or rearward of the front wheel 3 in the front-rear direction. The luggage support frame is preferably connected to one or both of the lower frame 35 and the first head pipe 31.

The parallel link mechanism 20 and the luggage support frame are disposed adjacent to each other. Adjacent means arranged side by side in a close position on the lean vehicle 1. However, the parallel link mechanism 20 and the luggage support frame do not need to be directly connected. The parallel link mechanism 20 and the luggage support frame may be arranged side by side in the front-rear direction (specifically, the luggage support frame may be arranged behind the parallel link mechanism 20). Alternatively, the parallel link mechanism 20 and the luggage support frame may be arranged side by side in the up-down direction (specifically, the luggage support frame may be arranged above the parallel link mechanism 20).

The rear frame 36 is a frame that is located in an area that includes the rear of the seat tube 33 in the front-rear direction. The rear frames 36 are provided one each on the top and bottom.

The above-described vehicle body frame 2 is one example, and the shape of each member, the presence or absence of each frame, the number of each frame, or the function of each frame can be changed.

Next, the mounting structure of the parallel link mechanism 20 on the vehicle body frame 2 will be described.

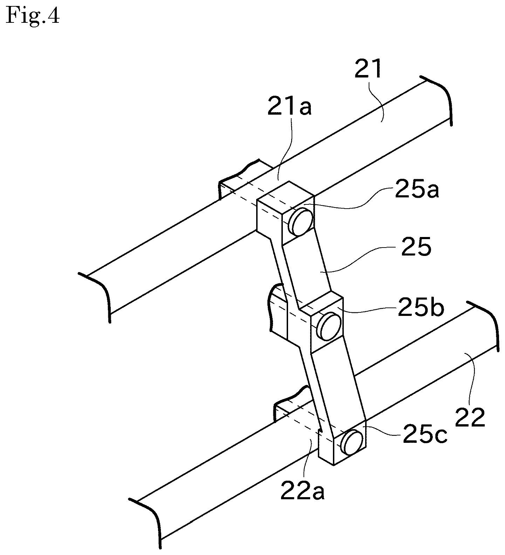

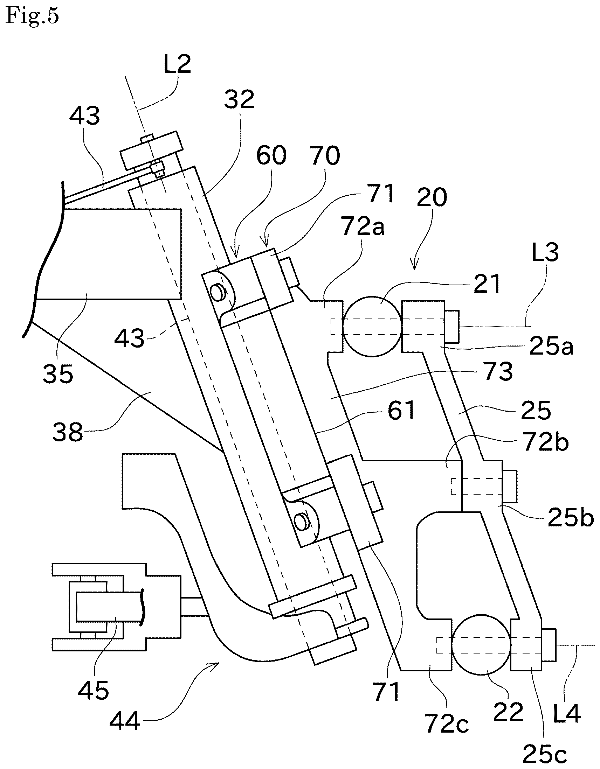

First, the mounting structure on the parallel link mechanism 20 side will be described. The parallel link mechanism 20 is connected to the vehicle body frame 2 using an upper arm 21, a lower arm 22, and a central arm 25. As shown in FIG. 5, the upper arm and the lower arm are arranged side by side along the rotation axis L2 of the second steering shaft 43 in a side view of the vehicle body. That is, the lower arm 22 is disposed shifted downward and forward with respect to the upper arm 21. As shown in FIG. 4, an upper fulcrum 21a is provided at the center of the upper arm 21 in the longitudinal direction. The upper fulcrum 21a has a through hole formed along an axis L3 that is parallel to the front-rear direction. The upper arm 21 is rotatably attached to the vehicle body frame 2 using an upper fulcrum 21a. Similarly, a lower fulcrum 22a is provided at the center of the lower arm 22 in the longitudinal direction. The lower fulcrum 22a has a through hole formed along an axis L4 that is parallel to the front-rear direction. The lower arm 22 is rotatably attached to the vehicle body frame 2 using a lower fulcrum 22a. The through hole of the upper fulcrum and the through hole of the lower fulcrum extend parallel to each other. As described above, since the upper arm and the lower arm are shifted in the front-rear direction, the positions of the upper fulcrum and the lower fulcrum are also shifted in the front-rear direction. The through hole of the upper arm 21 and the through hole of the lower arm 22 may have a structure in which a bearing is inserted, respectively. For example, the axis of the bearing inserted into the through hole of the upper arm 21 may coincide with the axis L3 of the through hole of the upper arm 21 and be parallel to the front-rear direction. Similarly, the axis of the bearing inserted into the through hole of the lower arm 22 may coincide with the axis L4 of the through hole of the lower arm 22 and be parallel to the front-rear direction.

The central arm 25 is formed with an upper connecting portion 25a, a central connecting portion 25b, and a lower connecting portion 25c. The upper connecting portion 25a, the central connecting portion 25b, and the lower connecting portion 25c each have a through hole formed therein that is parallel to the front-rear direction. The through holes of the upper fulcrum 21a and the upper connecting portion 25a are coaxial, and are attached together to the vehicle body frame 2 side. The through holes of the lower fulcrum 22a and the lower connecting portion 25c are coaxial, and are attached to the vehicle body frame 2 together. The central connecting portion 25b is attached independently to the vehicle body frame 2 side. For example, the central arm 25 and a portion on the vehicle body frame 2 side are fastened with a bolt so as to sandwich the bearings inserted into each arm. As a result, each arm is attached to the vehicle body frame 2 so as to be rotatable about a corresponding fulcrum.

In this embodiment, the arms constituting the parallel link mechanism 20 are connected to each other by through holes, but any structure may be used as long as the arms are linked and connected to each other. For example, a link portion may be provided for linking each arm to a fulcrum. Specifically, the link portion may be adjacent to the arm and may be welded or bolted to the arm.

Next, the connection structure on the vehicle body frame 2 side will be described.

A base 60 is formed on the vehicle body frame 2. The base 60 is a solid member, not a hollow member. In this embodiment, the base 60 is connected to the second head pipe 32 by welding. The parallel link mechanism 20 is attached to the base 60 via a mounting member 70. That is, in this embodiment, the parallel link mechanism 20 is not directly attached to the vehicle body frame 2, but is attached to the vehicle body frame 2 via the mounting member 70. In other words, in this embodiment, the mounting member 70, in which the positional relationship of multiple support parts (specifically, an upper support part 72a that supports the upper arm 21 described below and a lower support part 72c that supports the lower arm 22) is predetermined, is fixed to the second head pipe 32, and the upper support part that rotatably supports the upper arm and the lower support part that rotatably supports the lower arm are not welded separately to the head pipe. This makes it possible to prevent variation in the positional relationships between the multiple support parts that support the multiple arms when assembling the vehicle body. As a result, when attaching a plurality of support parts, it is not necessary to perform work to improve the accuracy of the positional relationship between the support parts. Therefore, the portion of the vehicle body frame 2 that is involved in supporting the parallel link mechanism 20 can be easily assembled.

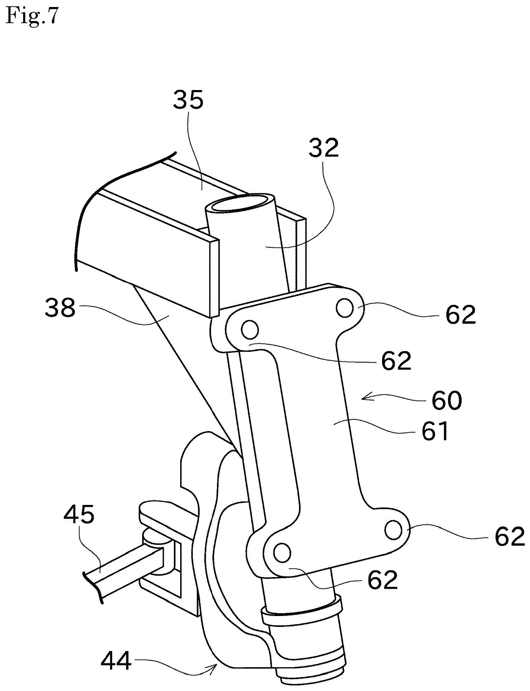

As shown in FIG. 7, the base 60 is formed on the front surface of the second head pipe 32. More specifically, the base 60 is fixed non-detachably to the front surface of the second head pipe 32 by welding. In particular, the base 60 extends along the rotation axis L2 of the second steering shaft 43 and is in surface contact with the second head pipe 32. This makes it possible to prevent the load transmitted from the base 60 to the second head pipe 32 from being concentrated.

The base 60 may be formed on another frame such as the lower frame 35 instead of the second head pipe 32. Instead of fixing the base 60 to the second head pipe 32 by welding, the base 60 may be formed by cutting a portion of the vehicle body frame 2.

The second head pipe 32 and the lower frame 35 are connected by welding. In detail, the middle portion or the upper end of the second head pipe 32 is disposed so as to intersect with the front end of the lower frame 35. The second head pipe 32 and the lower frame 35 are welded to each other at their intersections.

In this embodiment, the second head pipe 32 and the lower frame 35 are welded together via a reinforcing member 38 shown in FIG. 5. The reinforcing member 38 is welded to the rear surface of the second head pipe 32 and also to the lower surface of the lower frame 35. By not only directly welding the second head pipe 32 and the lower frame 35 but also providing portions where welding is performed via the reinforcing members 38, the connection between the second head pipe 32 and the lower frame 35 can be strengthened. As a result, the force in the front-rear direction transmitted to the base 60 is easily transmitted to the vehicle body frame 2. The reinforcing member 38 may be connected using fasteners such as bolts instead of welding. The reinforcing member 38 is not an essential component and can be omitted.

A flat surface 61 is formed on the front surface of the base 60. The flat surface 61 has a flat portion. The flat surface 61 is a surface that faces the front, in other words, the normal to the flat surface 61 includes a forward component. In detail, the flat surface 61 is not parallel to the up-down direction, but is inclined with respect to the up-down direction. **In** this embodiment, the flat surface of the base extends parallel to the rotation axis L2 of the steering shaft. As shown in FIG. 5, the inclination angle of the flat surface 61, the inclination angle of the mounting member 70, the inclination angle of the parallel link mechanism 20, and the inclination angle of the second head pipe 32 all coincide with each other in a side view. These inclination angles are downwardly inclined toward the front, in other words, inclined such that the lower end is located further forward than the upper end.

The flat surface 61 has a bolt hole 62 formed therein. Specifically, the upper and lower ends of the flat surface 61 each include a portion that protrudes outward in the left-right direction relative to the second head pipe 32. A bolt hole 62 is formed in each of these four protruding portions. The bolt holes 62 are holes for attaching the mounting member 70 to the base 60. The bolt hole 62 is a through hole for inserting the shaft of a bolt. By positioning the bolt holes 62 on the outside in the left-right direction with respect to the second head pipe 32, it is not necessary to match the shape of the second head pipe 32 to the base 60, and the bolt holes 62 can be easily formed. The bolt hole 62 may be a hole having a thread corresponding to a bolt. The bolt holes 62 are formed side by side, two in each of the left-right direction and the up-down direction. Forming the bolt holes 62 in the protruding portions is just one example. For example, the bolt holes 62 may be formed at each of the four corners of the rectangular flat surface 61. The position, number, and disposition of the bolt holes 62 are merely an example and may be different from those in this embodiment.

The mounting member 70 is an integrally constructed metal part. Being integrally constructed means that the multiple support parts 72a, 72b, 72c are not independently connected to a pipe member, but are constructed from a single continuous material, or the multiple support parts 72a, 72b, 72c are connected together via fasteners. In this embodiment, the mounting member 70 is formed using a mold, or is formed by cutting out a block of material. Thus, the mounting member 70 is a solid member rather than a hollow member. As shown in FIG. 6, the mounting member 70 includes a mounting portion 71, an upper support part 72a, a central support part 72b, a lower support part 72c, and a connecting part 73. The upper support part 72a and the lower support part 72c mainly correspond to the "support part". However, the central support part 72b may also be treated as the "support part". For example, with the basis member that serves as the basis for the mounting member fixed to the processing device, holes are formed in the upper support part, the lower support part and the central support part in sequence by cutting, thereby preventing variation in the relative positions of each hole. Even when the support parts are connected via the connecting part, a jig for connection can be made smaller than when the support parts are connected to a frame member.

The mounting portion 71 is a portion for mounting the mounting member 70 to the base 60. In detail, the mounting member 70 has a total of four mounting portions 71 that protrude outward in the left-right direction. Each of the mounting portions 71 has a through hole formed therein. The positional relationship of the four through holes corresponds to the positional relationship of the four bolt holes 62. In other words, the mounting member 70 can be attached to the base 60 by aligning the position of the through hole of the mounting member 70 with the position of the bolt hole 62 of the base 60, inserting a bolt, and fastening it with a nut. Since the mounting member 70 is fastened with bolts and nuts, and the mounting member 70 is detachable from the base 60. Even when a thread is formed in the bolt hole 62, the mounting member 70 can be attached to and detached from the base 60. Forming the mounting portion 71 on the protruding portion is just one example. For example, the mounting portions 71 may be formed at each of the four corners of a rectangular mounting member 70. The position, number, and arrangement of the mounting portions 71 are merely examples and may be different from those in this embodiment.

The parallel link mechanism 20 is attached to the mounting member 70. The mounting member 70 is detachable from the base 60 which is a part of the vehicle body frame 2. As described above, in this embodiment, the parallel link mechanism 20 is detachable from the vehicle body frame 2. Therefore, with the parallel link mechanism 20 attached to the mounting member 70, the mounting member 70 can be attached to the base 60. As a result, the parallel link mechanism 20 can be attached to the vehicle body frame 2 after being assembled, improving the workability of the assembly. Even when performing maintenance, repairs, and the like, the mounting member 70 can be removed from the base 60 with the parallel link mechanism 20 attached to the mounting member 70. This improves disassembly workability.

The mounting member 70 is detachable from the base 60 is merely an example, and the mounting member 70 may not be detachable. For example, the mounting member 70 may be attached to the base 60 by rivets, welding, or the like.

In order to operate the parallel link mechanism 20 appropriately, high precision is required for the positional relationship of each arm, particularly the support position. As described above, when the support parts 72a, 72b, 72c are attached separately to the vehicle body frame 2, high positioning accuracy with respect to the vehicle body frame 2 is required for each of the support parts 72a, 72b, 72c. In this regard, in this embodiment, it is only necessary to precisely determine the relative positions of the support parts 72a, 72b, 72c of the mounting member 70, so that the mounting precision required for the mounting member 70 with respect to the vehicle body frame 2 can be reduced. As a result, the portion of the vehicle body frame 2 that is involved in supporting the parallel link mechanism 20 can be easily assembled.

The upper support part 72a, the central support part 72b, and the lower support part 72c are parts that rotatably support the arms of the parallel link mechanism 20, and correspond to support parts. Hereinafter, the upper support part 72a, the central support part 72b, and the lower support part 72c may be collectively referred to as support parts 72a, 72b, and 72c. The support parts 72a, 72b, and 72c each have a screw hole formed therein, so that a bolt can be fixed thereto. An upper fulcrum 21a of the upper arm 21 is rotatably supported by the upper support part 72a. Specifically, the upper arm 21 and the central arm 25 are rotatably supported on the mounting member 70 by aligning the through hole of the upper fulcrum 21a, the upper connecting portion 25a of the central arm 25, and the screw hole of the upper support part 72a, and inserting and fastening a bolt. **In** addition, by aligning the through hole of the lower fulcrum 22a, the lower connecting portion 25c of the central arm 25, and the screw hole of the lower support part 72c, and inserting a bolt to fasten them, the lower arm 22 and the central arm 25 are rotatably supported on the mounting member 70. The central connecting portion 25b of the central arm 25 and the screw hole of the central support part 72b are aligned with each other and a bolt is inserted and fastened, whereby the central arm 25 is rotatably supported by the mounting member 70. The central support part 72b and the central arm 25 are not essential components and may be omitted. In other words, the mounting member 70 may not have the central support part 72b. The method of attaching the arms constituting the parallel link mechanism 20 is not limited to bolt fastening. For example, if the base 60 has a threaded rod, each arm may be attached using a nut. Other existing connection structures may be applied.

The connecting part 73 connects the multiple support parts in the up-down direction. The connecting part 73 is a component that forms the base of the mounting member 70. The mounting portion 71 and the support parts 72a, 72b, 72c are formed on the connecting part 73 or are connected to the connecting part 73. As a result, the connecting part 73 connects (integrates) the mounting portion 71 and the support parts 72a, 72b, and 72c to one another.

The base 60 and the mounting member 70 are not limited to being solid members, and may be hollow members. The material of the base 60 and the mounting member 70 is not limited to metal. For example, a carbon fiber material may be used instead of metal.

Next, the layout of each part of the mounting member 70 will be described.

The upper support part 72a is located lower than the upper end of the base 60 and also lower than the upper end of the lower frame 35. The central support part 72b is located higher than the lower end of the vehicle body frame 2 (more specifically, the lower end of the second head pipe 32). The lower support part 72c is located lower than the lower end of the vehicle body frame 2 (more specifically, the lower end of the second head pipe 32) and also lower than the lower end of the base 60. The central support part 72b is located forward of the upper support part 72a and the lower support part 72c. This allows the dimension of the central arm 25 in the front-rear direction to be reduced.

The mounting portion 71 is formed at a position different from the support parts 72a, 72b, and 72c. In other words, the mounting portion 71 does not also function as the support parts 72a, 72b, and 72c. As a result, the structure of the mounting portion 71, which requires high precision, can be simplified. The mounting portion 71 and the support parts 72a, 72b, and 72c may be formed at the same position.

The mounting portions 71 are formed in pairs at positions separated by two on the left and right sides of the second head pipe 32 in the left-right direction. In other words, two mounting portions 71 are formed on each of the left and right sides of the support parts 72a, 72b, and 72c in the left-right direction. The mounting portions 71 are formed in two on each of the upper and lower positions. In detail, the upper mounting portion 71 is located higher than the upper support part 72a, and the lower mounting portion 71 is located lower than the upper support part 72a and higher than the lower support part 72c. In other words, the upper mounting portion 71 is located at a higher position (a position spaced apart in the up-down direction) than the support parts 72a, 72b, and 72c. By dispersing the positions of the mounting portions 71 in this manner, the support rigidity with which the vehicle body frame 2 supports the mounting member 70 and the parallel link mechanism 20 can be increased. The layout in the left-right direction of the mounting portions 71 and the layout in the up-down direction of the mounting portions 71 are separate technologies each having a different effect, and it is possible to adopt only one of the layouts.

The lean vehicle 1 whose main purpose is to transport luggage 100, as in this embodiment, may have a smaller diameter front wheel 3 and rear wheel 4 than a typical bicycle in order to ensure space for placing luggage. As a result, the positions of the second head pipe 32, the parallel link mechanism 20, etc. are also lowered, which can cause problems with contact between these members or their surrounding members and the road surface.

In this regard, the lower end of the mounting member 70 is located lower than the lower end of the vehicle body frame 2, in other words, lower than the second head pipe 32. This allows the lower end of the vehicle body frame 2 to be spaced upward from the road surface. As a result, the lower end of the vehicle body frame 2 is less likely to come into contact with obstacles protruding from the road surface. The connecting member 44 protrudes further downward from the lower end of the second head pipe 32. The connecting member 44 is an example of the peripheral member described above. Therefore, the surrounding components are closer to the road surface in the up-down direction. In this regard, in the configuration of this embodiment, the lower end of the vehicle body frame 2 is located relatively high (higher than the lower end of the mounting member 70), so that the surrounding members can be spaced upward from the road surface. As a result, the peripheral members are less likely to come into contact with obstacles protruding from the road surface.

If contact between the surrounding components and the road surface is unlikely to be a problem, the lower end of the mounting member 70 may be located lower than the lower ends of the surrounding components. This allows the mounting member 70 to protect the surrounding components.

In this embodiment, the mounting position of the mounting member 70 relative to the base 60 is fixed. Alternatively, the mounting position of the mounting member 70 relative to the base 60 may be changeable by adopting the following configuration. For example, by forming a plurality of bolt holes 62 in one mounting portion 71 and selecting the bolt hole 62 to be used for mounting the mounting portion 71, the mounting position of the mounting member 70 relative to the base 60 can be changed. Alternatively, the mounting position of the mounting member 70 relative to the base 60 can be changed by making the bolt holes 62 elongated.

The base 60 and the mounting member 70 in this embodiment are structures for mounting the parallel link mechanism 20 provided on the front wheel 3 side to the vehicle body frame 2. Alternatively, the parallel link mechanism 20 may be provided on the rear wheel 4 side. In this case as well, the same effect can be achieved by using substantially the same configuration as the base 60 and the mounting member 70 of this embodiment (more specifically, a configuration in which the front and rear are reversed).

(Feature 1) As described above, the lean vehicle 1 of this embodiment includes the left front wheel 3a, the right front wheel 3b, the parallel link mechanism 20, the mounting member 70, and the vehicle body frame 2. The parallel link mechanism 20 includes the upper arm 21 and the lower arm 22 arranged along the vehicle width direction between the left front wheel 3a and the right front wheel 3b, and a left arm 23 and a right arm 24 arranged along the up-down direction. The parallel link mechanism 20 operates in response to the lean of the vehicle. The mounting member 70 includes the plurality of support parts 72a, 72c and the connecting part 73. The multiple support parts 72a, 72c rotatably support fulcrums provided on the upper arm 21 and the lower arm 22, respectively. The connecting part 73 connects the multiple support parts 72a in the up-down direction. The base 60 is formed on the vehicle body frame 2 to which a mounting member 70 is attached.

In this configuration, the mounting member 70, which is the separate member from the vehicle body frame 2, has the plurality of support parts 72a, 72c. Therefore, there is no need to form the support parts 72a, 72c, which require high precision, on the vehicle body frame 2 side. As a result, the portion of the vehicle body frame 2 that is involved in supporting the parallel link mechanism 20 can be manufactured easily. In this embodiment, the support parts 72a, 72c are fixed to the second head pipe 32 in a state in which they are connected in advance by the connecting part 73. This makes it possible to reduce variation in the mounting positions of each support parts and eliminates the need for connecting jigs, compared to when each pipe-shaped support part is individually connected to the head pipe by welding. The manufacturing difficulty can be reduced and the support part can be easily assembled.

(Feature 2) In the lean vehicle 1 of this embodiment, the mounting member 70 has a mounting portion 71 that is attached to the vehicle body frame 2 at a position different from the multiple support parts 72a.

The mounting member 70 can achieve a supporting function for supporting each arm of the parallel link mechanism 20 and a mounting function for mounting the parallel link mechanism 20 to the vehicle body frame 2 at different positions and with different configurations. Therefore, a structure in which functions are concentrated in one place can be avoided.

(Feature 3) In the lean vehicle 1 of this embodiment, the mounting portion 71 is formed at a position spaced apart to the left and a position spaced apart to the right of the multiple support parts 72a, 72c.

The support rigidity with which the vehicle body frame 2 supports the mounting member 70 and the parallel link mechanism 20 can be increased.

(Feature 4) In the lean vehicle 1 of this embodiment, the mounting portion 71 is formed at a position spaced apart in the up-down direction from the multiple support parts 72a, 72c.

This allows greater freedom in designing the mounting portion 71 and the support parts 72a and 72c in the up-down direction compared to a configuration in which the mounting portion 71 and the support parts 72a and 72c are aligned in the up-down direction.

(Feature 5) In the lean vehicle 1 of this embodiment, the mounting member 70 is detachably attached to the vehicle body frame 2 by the mounting portion 71.

The subunit in which the parallel link mechanism 20 is supported by the support parts 72a, 72c can be attached to and detached from the vehicle body frame 2. Therefore, the assembly and disassembly work of the lean vehicle 1 can be simplified.

(Feature 6) In the lean vehicle 1 of this embodiment, the lower end of the mounting member 70 is located lower than the lower end of the vehicle body frame 2.

Compared to a configuration in which the lower end of the mounting member 70 is at the same position as or higher than the lower end of the vehicle body frame 2, the lower end of the vehicle body frame 2 can be spaced upward from the road surface. As a result, the lower end of the vehicle body frame 2 can be prevented from coming into contact with obstacles protruding upward from the road surface.

(Feature 7) In the lean vehicle 1 of this embodiment, the base 60 is formed with a flat surface 61. The normal to the flat surface 61 includes a forward component, and the mounting member 70 is in surface contact with the flat surface 61.

Since the base 60 of the vehicle body frame 2 can receive the load in the front-rear direction from the parallel link mechanism 20 on the flat surface 61, the load is unlikely to be concentrated on one part of the vehicle body frame 2.

(Feature 8) In the lean vehicle 1 of this embodiment, the vehicle body frame 2 is disposed adjacent to the parallel link mechanism 20 and has the lower frame 35 serving as a luggage support frame that supports luggage 100.

A bicycle equipped with this type of luggage support frame may be subjected to a large load, so the attachment points of the parallel link mechanism 20, etc., need to be strong. In the present application, the parallel link mechanism 20 is attached to the vehicle body frame 2 via the mounting member 70, so that it is easier to distribute the load transmitted between the parallel link mechanism 20 and the vehicle body frame 2 and the strength of the mounting point can be increased compared to when the parallel link mechanism 20 is directly connected to the vehicle body frame 2.

## Claims

1. A lean vehicle (1) comprising:
a left wheel (3a);
a right wheel (3b);
a parallel link mechanism (20) that includes a horizontal arm (21, 22) arranged along a vehicle width direction between the left wheel (3a) and the right wheel (3b) and a vertical arm (23-25) arranged along an up-down direction, and operates in response to a lean of a vehicle;
a mounting member (70) having a plurality of support parts (72a, 72b, 72c) that rotatably support fulcrums provided for each horizontal arm (21, 22), and a connecting part that connects the plurality of support parts (72a, 72b, 72c) in the up-down direction; and
a vehicle body frame (2) on which a base (60) to which the mounting member (70) is attached is formed.

2. The lean vehicle (1) according to claim 1, wherein
the mounting member (70) has a mounting portion (71) that is attached to the vehicle body frame (2) at a position different from the plurality of support parts (72a, 72b, 72c).

3. The lean vehicle (1) according to claim 2, wherein
the mounting portion (71) is formed at a position spaced apart to the left of the plurality of support parts (72a, 72b, 72c) and the mounting portion (71) is formed at a position spaced apart to the right of the plurality of support parts (72a, 72b, 72c).

4. The lean vehicle (1) according to claim 2 or 3, wherein
the mounting portion (71) is formed at a position spaced apart in the up-down direction from the plurality of support parts (72a, 72b, 72c).

5. The lean vehicle (1) according to any one of claims 2 to 4, wherein
the mounting member (70) is detachably attached to the vehicle body frame (2) by the mounting portion (71).

6. The lean vehicle (1) according to any one of claims 1 to 5, wherein
a lower end of the mounting member (70) is located lower than a lower end of the vehicle body frame (2).

7. The lean vehicle (1) according to any one of claims 1 to 6, wherein
the base (60) has a flat surface, and
a normal to the flat surface (61) includes a forward component, and the mounting member (70) is in surface contact with the flat surface (61).

8. The lean vehicle (1) according to any one of claims 1 to 7, wherein
The vehicle body frame (2) has a luggage support frame disposed adjacent to the parallel link mechanism (20) and supporting luggage.
